# EUROPEAN PATENT APPLICATION

(11) **EP 4 468 752 A1**
(43) Date of publication of application: **27.11.2024**
(21) Application number: 23752392.3
(22) Date of filing: 09.02.2023
(51) Int. Cl.: H04W 4/02

(54) **COMMUNICATION METHOD AND COMMUNICATION APPARATUS**

(30) Priority: 11.02.2022 CN 202210129935
(71) Applicant: Huawei Technologies Co., Ltd., Shenzhen, Guangdong 518129 (CN)
(72) Inventor: HAO, Jinping, Shenzhen, Guangdong 518129 (CN); HUANG, Su, Shenzhen, Guangdong 518129 (CN)
(74) Representative: Maiwald GmbH
(86) International application number: PCT/CN2023/075146
(87) International publication number: WO 2023/151612

(57) **Abstract**

Embodiments of this application disclose a communication method and a communication apparatus. The method in embodiments of this application includes: A terminal device determines capability information, where the capability information includes a low power capability, and the low power capability indicates that the terminal device supports low power positioning. The terminal device sends the capability information to a location management device. This helps the location management device notify an access network device that the terminal device supports the low power positioning, or indicate, to the access network device, that the terminal device has a low power requirement. The terminal device has different positioning capabilities in different radio resource control RRC states. Therefore, this helps the access network device properly configure an RRC state of the terminal device, so that the terminal device participates in a positioning process in the corresponding RRC state. Therefore, a positioning precision requirement of the location management device is ensured while the low power positioning of the terminal device is implemented, to meet a positioning service requirement of the location management device.

## Description

This application claims priority to Chinese Patent Application No. 202210129935.4, filed with the China National Intellectual Property Administration on February 11, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A positioning function is an important function of 5^{th} generation (5^{th} generation, 5G) wireless communication new radio (new radio, NR). An access network device and a terminal device may measure a reference signal, to position the terminal device. However, how to ensure positioning precision is a problem worth considering.

### SUMMARY

This application provides a communication method and a communication apparatus, to ensure positioning precision, so as to meet a positioning service requirement of a location management device.

A first aspect of this application provides a communication method, including:

A terminal device determines capability information, where the capability information includes a low power capability, and the low power capability indicates that the terminal device supports low power positioning; and the terminal device sends the capability information to a location management device.

In the foregoing technical solution, the terminal device has the low power capability, and the terminal device may report the low power capability to the location management device, so that the location management device determines that the terminal device supports the low power positioning. This helps the location management device notify an access network device that the terminal device supports the low power positioning, helps the location management device indicate the access network device to perform the low power positioning on the terminal device, or helps the location management device indicate, to the access network device, that the terminal device has a low power requirement. For example, in an uplink positioning scenario, the low power capability indicates that the terminal device supports sending of a sounding reference signal (sounding reference signal, SRS) in low power. In a downlink positioning scenario, the low power capability indicates that the terminal device supports receiving of a positioning reference signal (positioning reference signal, PRS) in low power. Because the terminal device has different positioning capabilities in different RRC states, the access network device may properly configure a radio resource control (radio resource control, RRC) state of the terminal device based on the capability information. Therefore, a positioning precision requirement is ensured while the low power positioning of the terminal device is implemented, to meet a positioning service requirement of the location management device. For example, the low power capability is a positioning capability of the terminal device in an RRC inactive state, and the access network device may configure the terminal device to be in the RRC inactive state. In this case, the terminal device can participate in a positioning process in the RRC inactive state, so that precision of positioning by the location management device on the terminal device is ensured while the low power positioning of the terminal device is implemented, to ensure the positioning service requirement. This avoids a problem that the positioning service requirement of the location management device cannot be met because the access network device autonomously determines the RRC state of the terminal device without the location management device.

In a possible implementation, the low power capability includes at least one of the following: a maximum quantity of SRS resources or SRS resource sets, an SRS bandwidth, and an SRS sending periodicity that are supported by the terminal device.

In this implementation, content specifically included in the low power capability is shown. In the uplink positioning scenario, a low power uplink positioning capability of the terminal device is represented by the maximum quantity of SRS resources or SRS resource sets, the SRS bandwidth, and the SRS sending periodicity that are supported by the terminal device. This helps the location management device determine the low power uplink positioning capability of the terminal device, so that the location management device determines whether the low power uplink positioning capability of the terminal device can meet the positioning service requirement of the location management device. If the requirement can be met, the location management device may indicate the access network device to perform the low power positioning on the terminal device.

In another possible implementation, the low power capability includes at least one of the following: that the terminal device supports measurement of a PRS in an RRC inactive state, a supported positioning method, a supported PRS bandwidth, and a maximum quantity of processing resources supported in one slot.

In this implementation, content specifically included in the low power capability is shown. In the downlink positioning scenario, a low power downlink positioning capability of the terminal device is represented by information: that the terminal device supports the measurement of the PRS in the RRC inactive state, the supported positioning method, the supported PRS bandwidth, and the maximum quantity of processing resources supported in one slot. This helps the location management device determine the low power downlink positioning capability of the terminal device, so that the location management device determines whether the low power downlink positioning capability of the terminal device can meet the positioning service requirement of the location management device. If the requirement can be met, the location management device may indicate the access network device to perform the low power positioning on the terminal device.

In another possible implementation, the method further includes:

The terminal device receives an RRC release message from an access network device, where the RRC release message is used to release the terminal device from an RRC connected state to the RRC inactive state or an RRC idle state.

In this implementation, the terminal device may receive the RRC release message sent by the access network device, so that the terminal device is released to the RRC inactive state or the RRC idle state. In this way, the access network device releases the terminal device to an appropriate RRC state, so that the terminal device participates in a positioning process in the RRC state, thereby implementing the low power positioning and ensuring the positioning service requirement of the location management device.

In another possible implementation, the method further includes:

The terminal device receives transmission reception point (transmission reception point, TRP) configuration information from the location management device, where the TRP configuration information is determined by the location management device based on the capability information.

In this implementation, in the downlink positioning scenario, the terminal device may receive the TRP configuration information. The TRP configuration information is determined by the location management device based on the capability information. This helps ensure the positioning service requirement of the location management device. In this case, the terminal device may receive a positioning reference signal of a specific TRP based on the TRP configuration information, and measure the positioning reference signal to obtain a measurement result. This helps the terminal device report the measurement result to the location management device, so that the location management device determines a location of the terminal device based on the measurement result, thereby positioning the terminal device.

In another possible implementation, the method further includes:

The terminal device receives an SRS configuration from the access network device, where the SRS configuration is determined by the access network device for the terminal device based on the capability information.

In this implementation, in the uplink positioning scenario, the terminal device may receive the SRS configuration. The SRS configuration is determined by the access network device for the terminal device based on the capability information. This helps ensure the positioning service requirement of the location management device. In this case, the terminal device may send an SRS based on the SRS configuration, so that the access network device measures the SRS sent by the terminal device to obtain a measurement result. In this way, the access network device may report the measurement result to the location management device, so that the location management device determines a location of the terminal device based on the measurement result, thereby positioning the terminal device.

A second aspect of this application provides a communication method, including:

A location management device receives capability information from a terminal device, where the capability information includes a low power capability, and the low power capability indicates that the terminal device supports low power positioning; and the location management device sends first information to an access network device, where the first information includes at least one of the following: the capability information and first indication information, the first indication information is used to recommend that the low power positioning be performed on the terminal device, and the access network device is a serving access network device of the terminal device.

In the foregoing technical solution, the location management device receives the capability information from the terminal device, and the location management device may send the first information to the access network device. The first information includes at least one of the following: the capability information and the first indication information. The low power capability indicates that the terminal device supports the low power positioning. For example, in an uplink positioning scenario, the low power capability indicates that the terminal device supports sending of an SRS in low power. In a downlink positioning scenario, the low power capability indicates that the terminal device supports receiving of a PRS in low power. The first indication information is used to recommend that low power positioning be performed on the terminal device. In other words, the first indication information indicates that the terminal device has a low power requirement. Because the terminal device has different positioning capabilities in different RRC states, the access network device may properly configure an RRC state of the terminal device based on the first information. In this way, the terminal device can participate in a positioning process in the RRC state configured by the access network device. Therefore, a positioning precision requirement is ensured while the low power positioning of the terminal device is implemented, to meet a positioning service requirement of the location management device. This avoids a problem that the positioning service requirement of the location management device cannot be met because the access network device autonomously determines the RRC state of the terminal device without the location management device.

In a possible implementation, the low power capability includes at least one of the following: a maximum quantity of SRS resources or SRS resource sets, an SRS bandwidth, and an SRS sending periodicity that are supported by the terminal device.

In this implementation, content specifically included in the low power capability is shown. In an uplink positioning scenario, a low power uplink positioning capability of the terminal device is represented by the maximum quantity of SRS resources or SRS resource sets, the SRS bandwidth, and the SRS sending periodicity that are supported by the terminal device. This helps the location management device determine the low power uplink positioning capability of the terminal device, so that the location management device determines whether the low power uplink positioning capability of the terminal device can meet the positioning service requirement of the location management device. If the requirement can be met, the location management device may indicate the access network device to perform the low power positioning on the terminal device.

In another possible implementation, the first information is carried in a positioning information request.

In this implementation, a carrier that carries the first information is provided, and may be specifically the positioning information request. To be specific, the first information is carried in an existing message, and a new message does not need to be redefined. This facilitates implementation of the solution.

In another possible implementation, the method further includes:

The location management device receives an SRS configuration from the access network device, where the SRS configuration is determined by the access network device for the terminal device based on the first information.

In this implementation, in the uplink positioning scenario, the location management device receives the SRS configuration from the access network device. The SRS configuration is determined by the access network device for the terminal device based on the first information. This helps ensure the positioning service requirement of the location management device.

In another possible implementation, the SRS configuration is carried in a positioning information response. In this implementation, a bearer carrier of the SRS configuration is provided, to facilitate implementation of the solution.

In another possible implementation, the low power capability includes at least one of the following: that the terminal device supports measurement of a PRS in an RRC inactive state, a supported positioning method, a supported PRS bandwidth, and a maximum quantity of processing resources supported in one slot.

In this implementation, content specifically included in the low power capability is shown. In the downlink positioning scenario, a low power downlink positioning capability of the terminal device is represented by information: that the terminal device supports the measurement of the PRS in the RRC inactive state, the supported positioning method, the supported PRS bandwidth, and the maximum quantity of processing resources supported in one slot. This helps the location management device determine the low power downlink positioning capability of the terminal device, so that the location management device determines whether the low power downlink positioning capability of the terminal device can meet the positioning service requirement of the location management device. If the requirement can be met, the location management device may indicate the access network device to perform the low power positioning on the terminal device.

In another possible implementation, the first information further includes at least one of the following: user equipment (user equipment, UE) measurement information and UE reporting information, the UE measurement information is measurement information used by the terminal device to measure the positioning reference signal, and the UE reporting information is information used by the terminal device to report a measurement result.

In this implementation, the location management device may further notify the access network device of the UE measurement information and the UE reporting information, so that the access network device learns of some downlink positioning parameters. This helps the access network device better configure the RRC state of the terminal device.

In another possible implementation, the method further includes: The location management device determines TRP configuration information based on the capability information; the location management device sends the TRP configuration information to the access network device; and the location management device sends the TRP configuration information to the terminal device.

In this implementation, in the downlink positioning scenario, the location management device determines the TRP configuration information based on the capability information. This helps ensure the positioning service requirement of the location management device. In this case, the terminal device may receive a positioning reference signal of a specific TRP based on the TRP configuration information, and measure the positioning reference signal to obtain a measurement result. This helps the terminal device report the measurement result to the location management device, so that the location management device determines a location of the terminal device based on the measurement result, thereby positioning the terminal device.

A third aspect of this application provides a communication method, including:

An access network device receives first information from a location management device, where the first information includes at least one of the following: capability information of a terminal device and first indication information, the capability information includes a low power capability, the low power capability indicates that the terminal device supports low power positioning, the first indication information is used to recommend that the low power positioning be performed on the terminal device, and the access network device is a serving access network device of the terminal device; and the access network device keeps the terminal device in a radio resource control RRC connected state or an RRC inactive state based on the first information, or releases the terminal device from an RRC connected state to an RRC inactive state or an RRC idle state based on the first information.

In the foregoing technical solution, the access network device receives the first information from the location management device, where the first information includes at least one of the following: the capability information of the terminal device and the first indication information, the capability information includes the low power capability, and the low power capability indicates that the terminal device supports the low power positioning. In other words, in an uplink positioning scenario, the low power capability indicates that the terminal device supports sending of an SRS in low power. In a downlink positioning scenario, the low power capability indicates that the terminal device supports receiving of a PRS in low power. The first indication information is used to recommend that the low power positioning be performed on the terminal device, or indicates that the terminal device has a low power requirement. Because the terminal device has different positioning capabilities in different RRC states, the access network device may keep the terminal device in the RRC connected state or the RRC inactive state based on the first information, or release the terminal device from the RRC connected state to the RRC inactive state or the RRC idle state based on the first information. In this way, the terminal device can participate in a positioning process in an RRC state configured by the access network device. Therefore, a positioning precision requirement is ensured while the low power positioning of the terminal device is implemented, to meet a positioning service requirement of the location management device. This avoids a problem that the positioning service requirement of the location management device cannot be met because the access network device autonomously determines the RRC state of the terminal device without the location management device.

In a possible implementation, the low power capability includes at least one of the following: a maximum quantity of SRS resources or SRS resource sets, an SRS bandwidth, and an SRS sending periodicity that are supported by the terminal device.

In this implementation, content specifically included in the low power capability is shown. In an uplink positioning scenario, a low power uplink positioning capability of the terminal device is represented by the maximum quantity of SRS resources or SRS resource sets, the SRS bandwidth, and the SRS sending periodicity that are supported by the terminal device. This helps the access network device determine the low power uplink positioning capability of the terminal device, and configure the RRC state of the terminal device based on the low power uplink positioning capability, so that the terminal device participates in a positioning process in the RRC state, to ensure a positioning precision requirement and meet the positioning service requirement of the location management device.

In another possible implementation, the first information is carried in a positioning information request.

In this implementation, a carrier that carries the first information is provided, and may be specifically the positioning information request. To be specific, the first information is carried in an existing message, and a new message does not need to be redefined. This facilitates implementation of the solution.

In another possible implementation, the method further includes:

The access network device determines an SRS configuration for the terminal device based on the first information; the access network device sends the SRS configuration to the terminal device; and the access network device sends a positioning information response to the location management device, where the positioning information response includes the SRS configuration.

In this implementation, in the uplink positioning scenario, the access network device determines the SRS configuration for the terminal device based on the first information. This helps ensure the positioning service requirement of the location management device. Then, the access network device sends the SRS configuration to the location management device and the terminal device, to facilitate positioning of the terminal device.

In another possible implementation, the low power capability includes at least one of the following: that the terminal device supports measurement of a PRS in the RRC inactive state, a supported positioning method, a supported PRS bandwidth, and a maximum quantity of processing resources supported in one slot.

In this implementation, content specifically included in the low power capability is shown. In the downlink positioning scenario, a low power downlink positioning capability of the terminal device is represented by information: that the terminal device supports the measurement of the PRS in the RRC inactive state, the supported positioning method, the supported PRS bandwidth, and the maximum quantity of processing resources supported in one slot. This helps the access network device determine the low power downlink positioning capability of the terminal device, and configure the RRC state of the terminal device based on the low power downlink positioning capability, so that the terminal device participates in a positioning process in the RRC state, to ensure a positioning precision requirement and meet the positioning service requirement of the location management device.

In another possible implementation, the first information further includes at least one of the following: UE measurement information and UE reporting information, the UE measurement information is measurement information used by the terminal device to measure the positioning reference signal, and the UE reporting information is information used by the terminal device to report a measurement result.

In this implementation, the location management device may further notify the access network device of the UE measurement information and the UE reporting information, so that the access network device learns of some downlink positioning parameters. This helps the access network device better configure the RRC state of the terminal device.

In another possible implementation, that the access network device releases the terminal device from an RRC connected state to an RRC idle state or an RRC inactive state based on the first information includes:

If the low power capability is a positioning capability of the terminal device in the RRC inactive state or the RRC idle state, the access network device sends an RRC release message to the terminal device, where the RRC release message is used to release the terminal device from the RRC connected state to the RRC inactive state or the RRC idle state.

In this implementation, if the low power capability is a positioning capability of the terminal device in the RRC inactive state or the RRC idle state, the access network device may send an RRC release message to the terminal device. This helps release the terminal device from the RRC connected state to the RRC inactive state or the RRC idle state. In this way, the access network device releases the terminal device to an appropriate RRC state, so that the terminal device participates in a positioning process in the RRC state, thereby ensuring the positioning service requirement of the location management device.

In another possible implementation, the method further includes:

The access network device receives TRP configuration information of the location management device, where the TRP configuration information is determined by the location management device based on the capability information.

In this implementation, in the downlink positioning scenario, the access network device receives the TRP configuration information of the location management device. The TRP configuration information is determined by the location management device based on the capability information. This helps ensure the positioning service requirement of the location management device. In this case, the access network device may send a positioning reference signal based on the TRP configuration information. This helps the terminal device measure the positioning reference signal to obtain a measurement result.

A fourth aspect of this application provides a communication apparatus, including:
a processing unit, configured to determine capability information, where the capability information includes a low power capability, and the low power capability indicates that the communication apparatus supports low power positioning; and
a sending unit, configured to send the capability information to a location management device.

In a possible implementation, the low power capability includes at least one of the following: a maximum quantity of SRS resources or SRS resource sets, an SRS bandwidth, and an SRS sending periodicity that are supported by the communication apparatus.

In another possible implementation, the low power capability includes at least one of the following: that the communication apparatus supports measurement of a PRS in an RRC inactive state, a supported positioning method, a supported PRS bandwidth, and a maximum quantity of processing resources supported in one slot.

In another possible implementation, the communication apparatus is in an RRC connected state, and the communication apparatus further includes a receiving unit.

The receiving unit is configured to receive an RRC release message from an access network device, where the RRC release message is used to release the communication apparatus from the RRC connected state to the RRC inactive state or an RRC idle state.

In another possible implementation, the communication apparatus further includes the receiving unit.

The receiving unit is configured to receive TRP configuration information from the location management device, where the TRP configuration information is determined by the location management device based on the capability information.

In another possible implementation, the communication apparatus further includes the receiving unit.

The receiving unit is configured to receive an SRS configuration from the access network device, where the SRS configuration is determined by the access network device for the communication apparatus based on the capability information.

A fifth aspect of this application provides a communication apparatus, including:
a receiving unit, configured to receive capability information from a terminal device, where the capability information includes a low power capability, and the low power capability indicates that the terminal device supports low power positioning; and
a sending unit, configured to send first information to an access network device, where the first information includes at least one of the following: the capability information and first indication information, the first indication information is used to recommend that the low power positioning be performed on the terminal device, and the access network device is a serving access network device of the terminal device.

In a possible implementation, the low power capability includes at least one of the following: a maximum quantity of SRS resources or SRS resource sets, an SRS bandwidth, and an SRS sending periodicity that are supported by the terminal device.

In another possible implementation, the first information is carried in a positioning information request.

In another possible implementation, the receiving unit is further configured to:
receive an SRS configuration from the access network device, where the SRS configuration is determined by the access network device for the terminal device based on the first information.

In another possible implementation, the SRS configuration is carried in a positioning information response.

In another possible implementation, the low power capability includes at least one of the following: that the terminal device supports measurement of a PRS in an RRC inactive state, a supported positioning method, a supported PRS bandwidth, and a maximum quantity of processing resources supported in one slot.

In another possible implementation, the first information further includes at least one of the following: UE measurement information and UE reporting information, the UE measurement information is measurement information used by the terminal device to measure the positioning reference signal, and the UE reporting information is information used by the terminal device to report a measurement result.

In another possible implementation, the communication apparatus further includes: a processing unit, where
the processing unit is configured to determine TRP configuration information based on the capability information; and
the sending unit is further configured to:
   send the TRP configuration information to the access network device; and
   send the TRP configuration information to the terminal device.

A sixth aspect of this application provides a communication apparatus, including:
a receiving unit, configured to receive first information from a location management device, where the first information includes at least one of the following: capability information of a terminal device and first indication information, the capability information includes a low power capability, the low power capability indicates that the terminal device supports low power positioning, the first indication information is used to recommend that the low power positioning be performed on the terminal device, and the communication apparatus is a serving access network device of the terminal device; and
a processing unit, configured to keep the terminal device in an RRC connected state or an RRC inactive state based on the first information, or release the terminal device from the RRC connected state to the RRC inactive state or an RRC idle state based on the first information.

In a possible implementation, the low power capability includes at least one of the following: a maximum quantity of SRS resources or SRS resource sets, an SRS bandwidth, and an SRS sending periodicity that are supported by the terminal device.

In another possible implementation, the first information is carried in a positioning information request.

In another possible implementation, the processing unit is further configured to:
determine an SRS configuration for the terminal device based on the first information.

The communication apparatus further includes a sending unit.

The sending unit is configured to: send the SRS configuration to the terminal device; and send a positioning information response to the location management device, where the positioning information response includes the SRS configuration.

In another possible implementation, the low power capability includes at least one of the following: that the terminal device supports measurement of a PRS in an RRC inactive state, a supported positioning method, a supported PRS bandwidth, and a maximum quantity of processing resources supported in one slot.

In another possible implementation, the first information further includes at least one of the following: UE measurement information and UE reporting information, the UE measurement information is measurement information used by the terminal device to measure the positioning reference signal, and the UE reporting information is information used by the terminal device to report a measurement result.

In another possible implementation, the processing unit is specifically configured to:
if the low power capability is a positioning capability of the terminal device in the RRC inactive state or the RRC idle state, send an RRC release message to the terminal device, where the RRC release message is used to release the terminal device from the RRC connected state to the RRC inactive state or the RRC idle state.

In another possible implementation, the receiving unit is further configured to:
receive TRP configuration information of the location management device, where the TRP configuration information is determined by the location management device based on the capability information.

A seventh aspect of this application provides a communication apparatus, where the communication apparatus includes a processor and a memory.

The memory stores a computer program or computer instructions, and the processor is configured to invoke and run the computer program or the computer instructions stored in the memory, so that the processor implements any one of the implementations of the first aspect to the third aspect.

Optionally, the communication apparatus further includes a transceiver, and the processor is configured to control the transceiver to perform any one of the implementations of any one of the first aspect to the third aspect.

An eighth aspect of this application provides a communication apparatus, where the communication apparatus includes a processor. The processor is configured to invoke a stored computer program or computer instructions, so that the processor implements any one of the implementations of the first aspect to the third aspect.

Optionally, the communication apparatus further includes a transceiver, and the processor is configured to control the transceiver to perform any one of the implementations of any one of the first aspect to the third aspect.

Optionally, the processor and a memory are integrated together.

A ninth aspect of embodiments of this application provides a computer program product including computer instructions, where when the computer program product runs on a computer, the computer is enabled to perform any one of the implementations of the first aspect to the third aspect.

A tenth aspect of embodiments of this application provides a computer-readable storage medium, including computer instructions. When the computer instructions are run on a computer, the computer is enabled to perform any one of the implementations of the first aspect to the third aspect.

An eleventh aspect of embodiments of this application provides a chip apparatus, including a processor, configured to invoke a computer program or computer instructions in a memory, so that the processor performs any implementation of any one of the first aspect to the third aspect.

Optionally, the processor is coupled to the memory through an interface.

According to the foregoing technical solutions, it can be learned that embodiments of this application have the following advantages.

It can be learned from the foregoing technical solutions that the terminal device determines the capability information, where the capability information includes the low power capability, and the low power capability indicates that the terminal device supports the low power positioning. Then, the terminal device sends the capability information to the location management device. It can be learned that the terminal device may report the low power capability to the location management device. This helps the location management device notify the access network device that the terminal device supports the low power positioning, helps the location management device indicate the access network device to perform the low power positioning on the terminal device, or helps the location management device indicate, to the access network device, that the terminal device has the low power requirement. Because the terminal device has different positioning capabilities in different RRC states, the access network device may properly configure the RRC state of the terminal device based on the first information. In this way, the terminal device can participate in the positioning process in the RRC state configured by the access network device. Therefore, the positioning precision requirement is ensured while the low power positioning of the terminal device is implemented, to meet the positioning service requirement of the location management device. This avoids a problem that the positioning service requirement of the location management device cannot be met because the access network device autonomously determines the RRC state of the terminal device without the location management device.

### BRIEF DESCRIPTION OF DRAWINGS

FIG. 1 is a diagram of a communication system according to an embodiment of this application;
FIG. 2 is a diagram of an embodiment of a communication method according to an embodiment of this application;
FIG. 3 is a diagram of another embodiment of a communication method according to an embodiment of this application;
FIG. 4 is a diagram of another embodiment of a communication method according to an embodiment of this application;
FIG. 5 is a diagram of a structure of a communication apparatus according to an embodiment of this application;
FIG. 6 is another diagram of a structure of a communication apparatus according to an embodiment of this application;
FIG. 7 is another diagram of a structure of a communication apparatus according to an embodiment of this application; and
FIG. 8 is another diagram of a structure of a communication apparatus according to an embodiment of this application.

### DESCRIPTION OF EMBODIMENTS

Embodiments of this application provide a communication method and a communication apparatus, to ensure positioning precision, to meet a positioning requirement of a location management device.

The following clearly and completely describes the technical solutions in embodiments of this application with reference to the accompanying drawings in embodiments of this application.

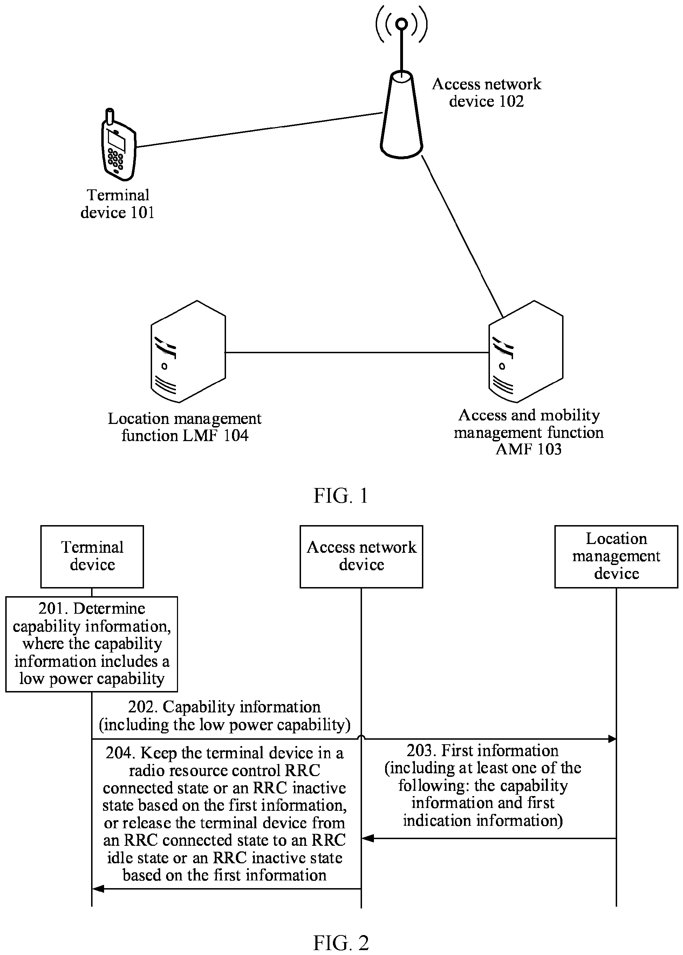

FIG. 1 is a diagram of a communication system according to an embodiment of this application. The communication system includes an access network device 102, an access and mobility management function (access and mobility management function, AMF) 103, and a location management function (location management function, LMF) 104.

Optionally, a terminal device 101 is connected to the access network device 102 through an interface, the access network device is connected to the AMF 103 through an interface, and the AMF 104 is connected to the LMF 104 through an interface. The LMF 104 is configured to perform positioning calculation and management on a location of the terminal device 101.

For example, the terminal device 101 is connected to the access network device 103 through an NR-Uu interface, and the access network device 102 is connected to the AMF 103 through an NG-C interface. The AMF 103 is connected to the LMF 104 through an NL1 interface.

FIG. 1 shows only an example in which the communication system includes the access network device 102. In actual application, the communication system may further include more access network devices. This is not specifically limited in this application.

The following describes the access network device and the terminal device that are provided in this application.

The access network device is an apparatus deployed in a radio access network for providing a wireless communication function for the terminal device. The access network device may include a base station. The base station includes a macro base station, a micro base station (also referred to as a small cell), a relay station, an access point (access point, AP), a wearable device, an in-vehicle device, and the like in various forms. The base station may further include a transmission reception point (transmission reception point, TRP), a transmission measurement function (transmission measurement function, TMF), and the like. For example, the base station related in this application may be a base station in new radio (new radio, NR). The base station in 5G NR may further include a transmission reception point (transmission reception point, TRP), a transmission point (transmission point, TP), a next generation NodeB (next Generation NodeB, gNB), or an evolved NodeB (evolved NodeB, eNB or eNodeB) in a long term evolution (long term evolution, LTE) system.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or an in-vehicle device having a wireless connection function. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The AMF 103 is responsible for access control, registration management, service management, mobility management, and the like for the terminal device to access a network.

The LMF 104 may be deployed in a core network, and is configured to perform positioning calculation and management on a location of the terminal device.

In this application, a name of the AMF 103 may change with evolution of a communication system. In a current communication system or a future communication system, a functional network element that has another name and that has a function similar to that of the AMF 103 may be understood as the AMF 103 in this application. The functional network element is applicable to the communication method provided in embodiments of this application.

In this application, the LMF is a name in a current communication system. In the future communication system, the name of the LMF may change with the evolution of the communication system. Therefore, the LMF is referred to as a location management device in the following to describe the technical solutions of this application. The location management device is configured to perform the positioning calculation on the location of the terminal device. The location management device may be deployed in an access network or the core network. This is not specifically limited in this application. In a current communication system or a future communication system, a functional network element that has another name and that has a function similar to that of the location management device may be understood as the location management device in this application. The functional network element is applicable to the communication method provided in this application.

The following first describes three possible RRC states of the terminal device. The three RRC states are respectively: an RRC connected (RRC connected) state, an RRC inactive (RRC inactive) state, and an RRC idle (RRC idle) state.

RRC connected state: There is an RRC connection between a terminal device and an access network device, and a connection between the access network device and a core network is established for the terminal device. The access network device stores a UE context of the terminal device. In the RRC connected state, the access network device and the terminal device can send a unicast message through the RRC connection.

RRC inactive state: An RRC connection between a terminal device and an access network device is suspended (suspended), and a connection between the access network device and a core network is established for the terminal device. The access network device stores a UE context of the terminal device. The terminal device may receive a broadcast message and a paging message. The paging message is initiated by the access network device.

RRC idle state: No RRC connection is established between a terminal device and an access network device, and no connection between the access network device and a core network is established for the terminal device. The access network device does not have a UE context of the terminal device. The terminal device may receive a broadcast message and a paging message. The paging message is initiated by the core network.

Scenarios to which embodiments of this application are applicable include but are not limited to an uplink positioning scenario, a downlink positioning scenario, and an uplink/downlink positioning scenario. This is not specifically limited in this application.

A positioning capability of the terminal device is related to an RRC state of the terminal device. A positioning capability of the terminal device in the RRC connected state may be understood as a conventional positioning capability of the terminal device. A positioning capability of the terminal device in the RRC inactive state is different from the positioning capability of the terminal device in the RRC connected state. A positioning capability of the terminal device in an RRC idle state is also different from the positioning capability of the terminal device in the RRC inactive state or the RRC connected state.

Therefore, the terminal device has a plurality of positioning capabilities at different levels. The positioning capabilities at different levels meet different positioning requirements, namely, different positioning precision. For example, in the uplink positioning scenario, the positioning capabilities at different levels may be reflected as capabilities of sending an SRS by the terminal device. For different SRS sending capabilities of the terminal device, precision of measurement results obtained by the access network device is also different, and precision of location results obtained by the location management device through calculation of the measurement results of the access network device is also different.

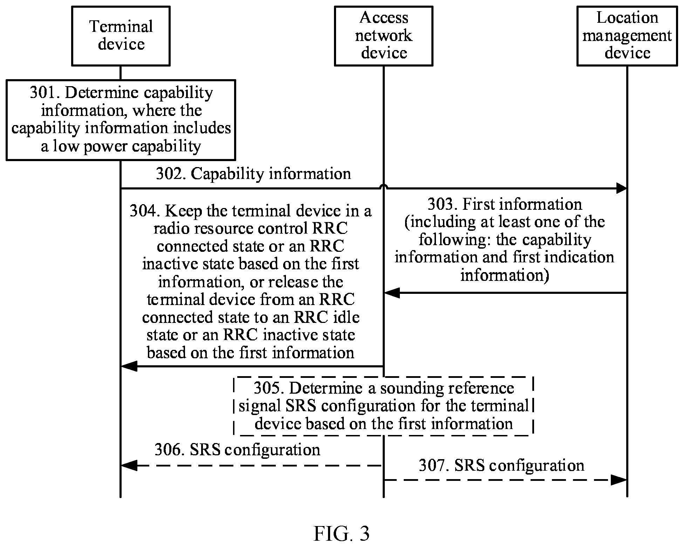

In the uplink positioning scenario, the location management device requests the access network device to determine an SRS configuration for the terminal device. The access network device determines the SRS configuration of the terminal device, and the access network device autonomously determines a state of the terminal device. For example, the access network device releases the terminal device from the RRC connected state to the RRC inactive state, so that the terminal device sends the SRS in the RRC inactive state. However, the location management device does not sense the state of the terminal device. It can be learned that, if the terminal device sends the SRS in the RRC inactive state, because a capability of sending the SRS in the RRC inactive state by the terminal device is lower than a capability of sending the SRS in the RRC connected state by the terminal device, an SRS used for positioning is limited. Consequently, uplink measurement precision is limited, and further, positioning precision does not meet a positioning requirement of the location management device. On this basis, this application provides a corresponding technical solution, to ensure the positioning precision, so that the positioning requirement of the location management device is met. For details, refer to related descriptions of embodiments shown in FIG. 2 and FIG. 3 below.

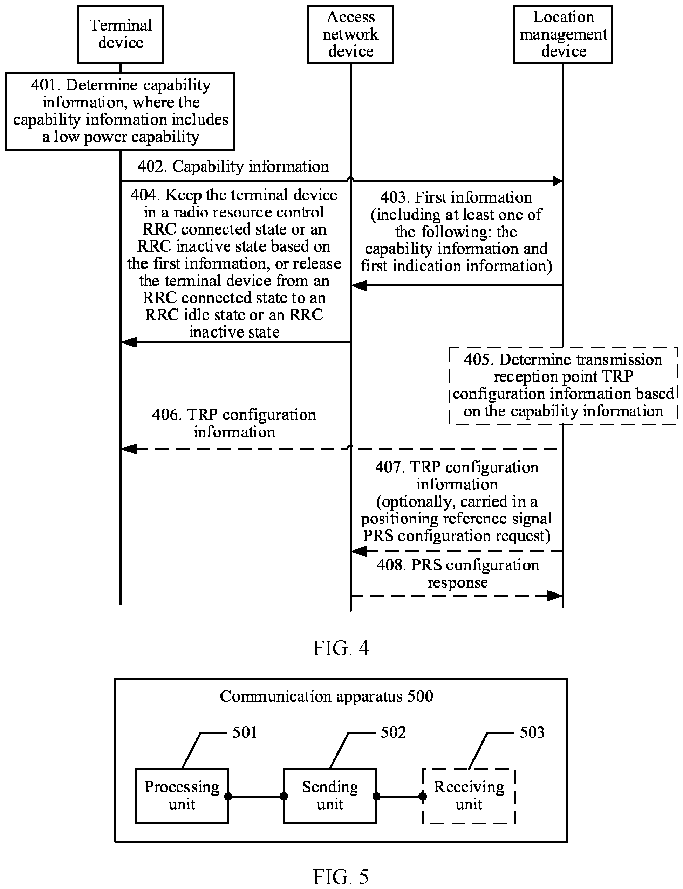

Similarly, in the downlink positioning scenario, after the location management device sends a positioning measurement request to the terminal device, the access network device cannot sense the positioning requirement of the location management device and a requirement on the RRC state of the terminal device. Therefore, the access network device autonomously determines the state of the terminal device. For example, the access network device releases the terminal device from the RRC connected state to the RRC inactive state when the terminal device has no service. The positioning capability of the terminal device in the RRC inactive state may be lower than the positioning capability of the terminal device in the RRC connected state. Therefore, precision of measuring a positioning reference signal (positioning reference signal, PRS) by the terminal device is limited, and downlink measurement precision is limited. Consequently, the positioning precision does not meet the positioning requirement of the location management device. On this basis, this application provides a corresponding technical solution, to ensure the positioning precision, so that the positioning requirement of the location management device is met. For details, refer to related descriptions of embodiments shown in FIG. 2 and FIG. 4 below.

The following describes the technical solutions of this application with reference to specific embodiments.

FIG. 2 is a diagram of an embodiment of a communication method according to an embodiment of this application. Refer to FIG. 2. The communication method includes the following steps.

201. A terminal device determines capability information, where the capability information includes a low power capability (low power capability).

The low power capability indicates that the terminal device supports low power positioning. For example, positioning power caused by the low power positioning performed by the terminal device is lower than positioning power caused by positioning performed by the terminal device in an RRC connected state. For example, in an uplink positioning scenario, the low power positioning may be represented as: Power consumption of sending an SRS by the terminal device is lower than power consumption of sending the SRS by the terminal device in the RRC connected state. In a downlink positioning scenario, the low power positioning may be represented as: Power consumption of measuring a PRS by the terminal device is lower than power consumption of measuring the PRS by the terminal device in the RRC connected state.

Optionally, in the uplink positioning scenario, the low power capability indicates that the terminal device supports sending of the SRS in low power. In the downlink positioning scenario, the low power capability indicates that the terminal device supports receiving of the PRS in low power.

Optionally, the low power capability may also be described as a reduced capability (reduced capability), a capability when power saving (capability when power saving), a low capability, a power efficient capability (power efficient capability), a capability in a power efficient mode (capability in power efficient mode), a low power positioning capability, a reduced positioning capability, a positioning capability when power saving, or the like. The name is not specifically limited in this application.

Specifically, this application defines a new positioning capability, namely, the low power capability, that is different from a defined positioning capability (which may be understood as a positioning capability of the terminal device in the RRC connected state) of the terminal device. For example, the low power capability may be understood as a positioning capability of the terminal device in an RRC inactive state or an RRC idle state. Optionally, the capability information further includes the defined positioning capability of the terminal device.

It should be noted that, in this application, the technical solution of this application is described by using an example in which the low power capability of the terminal device is defined. In actual application, a plurality of levels of positioning capabilities of the terminal device may be defined. Positioning capabilities at different levels may be positioning capabilities of the terminal device in different RRC states. This is not specifically limited in this application. The following mainly describes the technical solutions of this application by using the low power capability of the terminal device and the defined positioning capability of the terminal device as an example.

In a possible implementation, the low power capability includes at least one of the following: a maximum quantity of SRS resources or SRS resource sets, an SRS bandwidth, and an SRS sending periodicity that are supported by the terminal device.

In the uplink positioning scenario, the low power capability may be reflected as: the maximum quantity of SRS resources or SRS resource sets, the SRS bandwidth, and the SRS sending periodicity whose measurement is supported by the terminal device. In comparison with the defined positioning capability of the terminal device, the low power capability may have a smaller maximum quantity of SRS resources or SRS resource sets supported by the terminal device, and/or a smaller SRS bandwidth supported by the terminal device, and/or a longer SRS sending periodicity supported by the terminal device (this is because a capability of sending the SRS by the terminal device is poor, an occupied SRS resource is small, an occupied SRS bandwidth is small, and an SRS sending periodicity is long).

In this implementation, description of the low power capability may also be replaced with a low power uplink capability, a reduced uplink capability, or a power-saving uplink capability.

In another possible implementation, the low power capability includes at least one of the following: that the terminal device supports measurement of a positioning reference signal in the RRC inactive state, a supported positioning method, a supported PRS bandwidth, and a maximum quantity of processing resources supported in one slot.

In the downlink positioning scenario, the low power capability may be reflected as a capability of the terminal device to process the PRS. In comparison with a defined positioning capability of the terminal device, the low power capability may have fewer positioning methods supported by the terminal device, and/or a smaller supported PRS bandwidth, and/or a smaller maximum quantity of processing resources supported in one slot.

In this implementation, the low power capability may include capabilities of different positioning methods in the low power, for example, a low power downlink time difference of arrival (downlink time difference of arrival, DL-TDOA) capability and a low power downlink angle of departure (downlink angle of departure, DL-AOD) capability. The low power capability may also be referred to as a reduced capability, and specifically includes reduced capabilities of different positioning methods, for example, a reduced DL-TDOA capability and a reduced DL-AOD capability. Alternatively, the low power capability may also be referred to as the capability when power saving, and specifically includes capabilities of different positioning methods when power saving, for example, a DL-TDOA capability when power saving and a DL-AOD capability when power saving.

It should be noted that the foregoing separately describes the low power capability from perspectives of the uplink positioning scenario and the downlink positioning scenario. In an actual application, the terminal device may report, to a location management device through the capability information, content included in the low power capability in the uplink positioning scenario and a content included in the low power capability in the downlink positioning scenario. This is not specifically limited in this application.

202. The terminal device sends the capability information of the terminal device to the location management device. Correspondingly, the location management device receives the capability information from the terminal device.

The capability information of the terminal device includes the low power capability. Optionally, the capability information further includes the defined positioning capability of the terminal device. For example, the location management device is an LMF.

Optionally, the terminal device sends the capability information of the terminal device to the location management device through a long term evolution positioning protocol (long term evolution positioning protocol, LPP) message. Information carried in the LPP message is transparently transmitted to the access network device, in other words, the terminal device transparently transmits the capability information to the location management device through the LPP message. Correspondingly, the location management device obtains the capability information through the LPP message.

Optionally, the terminal device sends a provide capability (provide capability) message to the location management device, where the provide capability message includes the capability information of the terminal device.

203. The location management device sends first information to the access network device. The first information includes at least one of the following: the capability information and first indication information. Correspondingly, the access network device receives the first information from the location management device.

The first indication information is used to recommend that the low power positioning be performed on the terminal device, or indicates that the terminal device has a low power requirement.

Optionally, the first indication information may be alternatively described as or replaced with a low power indication, a low capability indication, a power saving indication, or a reduction indication.

Specifically, after the location management device receives the capability information from the terminal, the location management device may analyze whether the low power capability of the terminal device can meet a positioning requirement of the location management device (for example, the positioning requirement includes positioning precision, a positioning delay, and the like). If the positioning requirement can be met, the location management device may send the first information to the access network device.

For example, the low power capability includes at least one of the following: the maximum quantity of SRS resources or SRS resource sets, the SRS bandwidth, and the SRS sending periodicity that are supported by the terminal device. The location management device determines that a configuration included in the low power capability can meet the positioning requirement of the location management device, and the location management device may send the first information to the access network device.

For example, the low power capability includes at least one of the following: that the terminal device supports the measurement of the positioning reference signal in the RRC inactive state, the supported positioning method, the supported PRS bandwidth, and the maximum quantity of processing resources supported in one slot. The location management device determines that a configuration included in the low power capability can meet the positioning requirement of the location management device, and the location management device may send the first information to the access network device.

It should be noted that, if the positioning requirement cannot be met, the location management device may not send the first information to the access network device. In this implementation, the access network device may configure the terminal device to be in the RRC connected state, to ensure the positioning requirement of the location management device. Alternatively, the access network device may autonomously determine an RRC state of the terminal device in an existing manner. This is not specifically limited in this application.

For example, the first information includes the capability information, and the location management device indirectly recommends, through the low power capability in the capability information, that the low power positioning be performed on the terminal device, or indirectly prompts, through the low power capability in the capability information, to perform the low power positioning on the terminal device. The first information includes the first indication information, and the location management device directly recommends, through the first indication information, that the low power positioning be performed on the terminal device, or indirectly prompts, through the first indication information, to perform the low power positioning on the terminal device. The first information includes the capability information and the first indication information. The location management device notifies, through the capability information, the access network device that the terminal device has the low power positioning capability. The location management device directly recommends, through the first indication information, that the low power positioning be performed on the terminal device, or indirectly prompts, through the first indication information, to perform the low power positioning on the terminal device.

Optionally, the first indication information indicates or prompts the access network device to perform the low power positioning on the terminal device. Further, the access network device may autonomously determine whether to perform the low power positioning on the terminal device.

Optionally, this application is applicable to the uplink positioning scenario, and is also applicable to the downlink positioning scenario. For different positioning scenarios, the first information is carried on different carriers. For details, refer to the following related descriptions in FIG. 3 and FIG. 4. Details are not described herein again.

Optionally, in an implementation in which the low power capability includes at least one of the following: that the terminal device supports measurement of the positioning reference signal in the RRC inactive state, the supported positioning method, the supported PRS bandwidth, and the maximum quantity of processing resources supported in one slot, the first information further includes at least one of the following: UE measurement information and UE reporting information.

The UE measurement information is measurement information used by the terminal device to measure a PRS, for example, a periodicity of measuring the PRS by the terminal device and a time length of measuring the PRS each time. The UE reporting information is information used by the terminal device to report a measurement result, for example, a periodicity in which the terminal device reports the measurement result.

Optionally, the location management device sends the first information to the access network device through a new radio positioning protocol A (new radio positioning protocol A, NRPPa) message. Correspondingly, the access network device may obtain the first information through the NRPPa message.

204. The access network device keeps the terminal device in the RRC connected state or the RRC inactive state based on the first information, or releases the terminal device from the RRC connected state to the RRC idle state or the RRC inactive state based on the first information.

Specifically, the access network device determines the low power capability of the terminal device based on the first information. The access network device keeps the terminal device in the RRC connected state or the RRC inactive state based on a relationship between the low power capability and the RRC state of the terminal device and the current RRC state of the terminal device, or releases the terminal device from the RRC connected state to the RRC idle state or the RRC inactive state based on a relationship between the low power capability and the RRC state of the terminal device and the current RRC state of the terminal device.

For example, the terminal device is currently in the RRC connected state. If the low power capability is the positioning capability of the terminal device in the RRC idle state or the RRC inactive state, the access network device may send an RRC release message to the terminal device, where the RRC release message is used to release the terminal device to the RRC idle state or the RRC inactive state. Correspondingly, the terminal device receives the RRC release message from the access network device. The terminal device may determine the RRC state of the terminal device through the RRC release message.

For example, the terminal device is currently in the RRC inactive state. If the low power capability is the positioning capability of the terminal device in the RRC inactive state, the access network device may keep the terminal device in the RRC inactive state.

For example, the terminal device is currently in the RRC connected state. If the low power capability is the positioning capability of the terminal device in the RRC connected state, the access network device may keep the terminal device in the RRC connected state.

It can be learned that, in the technical solution of this application, the access network device may properly configure the state of the terminal device through the first information, to implement the low power positioning of the terminal device and ensure a positioning precision requirement of the location management device.

It should be noted that step 204 is a possible implementation. In actual application, there may further be another implementation for the access network device. For example, the terminal device is currently in the RRC inactive state. If the low power capability is the positioning capability of the terminal device in the RRC idle state, the access network device may send the RRC release message to the terminal device, where the RRC release message indicates the terminal device to release to the RRC idle state. Correspondingly, the terminal device receives the RRC release message from the access network device. The terminal device may determine the RRC state of the terminal device through the RRC release message. Specifically, if the low power capability is the positioning capability of the terminal device in the RRC idle state, the access network device may delete a UE context of the terminal device.

In this embodiment of this application, the terminal device determines the capability information, where the capability information includes the low power capability, and the low power capability indicates that the terminal device supports the low power positioning. Then, the terminal device sends the capability information to the location management device. It can be learned that, the terminal device may report the low power capability to the location management device, so that the location management device determines that the terminal device supports the low power positioning. This helps the location management device notify the access network device that the terminal device supports the low power positioning or an indication, helps the location management device indicate the access network device to perform the low power positioning on the terminal device, or helps the location management device indicate, to the access network device, that the terminal device has the low power requirement. Because the terminal device has different positioning capabilities in different RRC states, the access network device may properly configure the RRC state (the RRC connected state, the RRC idle state, or the RRC inactive state) of the terminal device based on the first information. In this way, the terminal device can participate in a positioning process in the RRC state configured by the access network device. Therefore, a positioning precision requirement is ensured while the low power positioning of the terminal device is implemented, to meet a positioning service requirement of the location management device. For example, the low power capability is the positioning capability of the terminal device in the RRC inactive state, and the access network device may configure the terminal device to be in the RRC inactive state. In this case, the terminal device can participate in the positioning process in the inactive state, so that the low power positioning of the terminal device is implemented, to ensure the precision of positioning by the location management device on the terminal device. This avoids a problem that the positioning service requirement of the location management device cannot be met because the access network device autonomously determines the RRC state of the terminal device without the location management device.

This application further provides another embodiment. This embodiment is similar to the embodiment shown in FIG. 2, and a difference lies in step 202. Step 202 above may be replaced with: The terminal device sends second information to the location management device, where the second information indicates that the terminal device supports the low power capability, or the second information indicates the low power capability supported by the terminal device. In this embodiment, for a related description of the low power capability, refer to the related description in the embodiment shown in FIG. 2 above. Details are not described herein again.

Optionally, in an implementation in which the second information indicates the low power capability supported by the terminal device, the second information may be indication information. For example, when a value of the indication information is "1", it indicates that the terminal device supports the low power capability. When the indication information is "0", it indicates that the terminal device does not support the low power capability.

Optionally, in an implementation in which the second information indicates the low power capability supported by the terminal device, the second information may be the indication information. For example, when the value of the indication information is "0", it indicates that the terminal device supports a first-level low power capability. When the value of the indication information is "1", it indicates that the terminal device supports a second-level low power capability.

It should be noted that the indication information may further have more values, and these values correspond to more levels of low power capabilities. The foregoing is merely an example, and does not constitute a limitation on this application.

For example, in the uplink positioning scenario, in comparison with the positioning capability of the terminal device in the RRC connected state, the first-level low power capability has a smaller quantity of maximum SRS resources or SRS resource sets supported by the terminal device, a smaller supported SRS bandwidth, and the like. For example, the first-level low power capability may be an uplink positioning capability of the terminal device in the RRC inactive state. In comparison with the first-level low power capability, the second-level low power capability has a smaller quantity of maximum SRS resources or SRS resource sets supported by the terminal device, a smaller supported SRS bandwidth, and the like. For example, the second-level low power capability may be an uplink positioning capability of the terminal device in the RRC idle state.

For example, in the downlink positioning scenario, in comparison with the positioning capability of the terminal device in the RRC connected state, the first-level low power capability has a smaller PRS bandwidth supported by the terminal device, a smaller maximum quantity of processing resources supported in one slot, and the like. For example, the first-level low power capability may be a downlink positioning capability of the terminal device in the RRC inactive state. In comparison with the first-level low power capability, the second-level low power capability has a smaller PRS bandwidth supported by the terminal device, a smaller maximum quantity of processing resources supported in one slot, and the like. For example, the second-level low power capability may be the downlink positioning capability of the terminal device in the RRC idle state.

With reference to FIG. 3, the following describes a specific implementation process in which this application is applied to an uplink positioning scenario.

FIG. 3 is a diagram of another embodiment of a communication method according to an embodiment of this application. Refer to FIG. 3. The communication method includes the following steps.

301. A terminal device determines capability information, where the capability information includes a low power capability.

302. The terminal device sends the capability information to a location management device. Correspondingly, the location management device receives the capability information from the terminal device.

Step 301 and step 302 are similar to step 201 and step 202 in the embodiment shown in FIG. 2 above. For details, refer to related descriptions of step 301 and step 302 above. Details are not described herein again.

303. The location management device sends first information to an access network device. The first information includes at least one of the following: capability information and first indication information. Correspondingly, the access network device receives the first information from the location management device.

Step 303 is similar to step 203 in the embodiment shown in FIG. 2 above. For details, refer to related descriptions of step 203 in the embodiment shown in FIG. 2 above.

Optionally, step 303 above specifically includes: The location management device sends a positioning information request (positioning information request) to the access network device, where the positioning information request includes the first information. Correspondingly, the access network device receives the positioning information request from the location management device.

It should be noted that the first indication information may alternatively be described as or replaced with assistance information (assistance information), and the assistance information is used to recommend that low power positioning be performed on the terminal device. In other words, the location management device recommends, in a form of the assistance information to the access network device, that the low power positioning be performed on the terminal device, or indicates that the terminal device has a low power requirement. The positioning information request may further include more recommended configuration information. For example, the location management device recommends an SRS configuration determined by the access network device for the terminal device, for example, an SRS sending periodicity or an SRS resource.

304. The access network device keeps the terminal device in an RRC connected state or an RRC inactive state based on the first information, or releases the terminal device from an RRC connected state to an RRC idle state or an RRC inactive state based on the first information.

Step 304 is similar to step 204 in the embodiment shown in FIG. 2 above. For details, refer to related descriptions of step 204 in the embodiment shown in FIG. 2 above. Details are not described herein again.

Optionally, the embodiment shown in FIG. 3 further includes step 305 to step 307. Step 305 to step 307 may be performed after step 303.

305. The access network device determines the SRS configuration for the terminal device.

Optionally, the SRS configuration includes at least one of the following: an SRS resource or an SRS resource set, an SRS bandwidth, and an SRS sending periodicity that are configured by the access network device for the terminal device.

In a possible implementation, in step 303, the location management device sends the first information to the access network device through the positioning information request. Optionally, the positioning information request further includes recommended configuration information, a positioning service requirement, and the like. The access network device may determine the SRS configuration for the terminal device based on information, for example, the recommended configuration information and the positioning service requirement.

In another possible implementation, the access network device determines the SRS configuration for the terminal device based on the first information.

Specifically, the access network device determines the low power capability of the terminal device based on the first information. Then, the access network device determines a maximum quantity of SRS resources or SRS resource sets, an SRS bandwidth, and an SRS sending periodicity that are supported by the terminal device in the low power capability. The access network device may determine the SRS configuration for the terminal device based on the information.

Optionally, in the foregoing step 303, the location management device sends the first information through the positioning information request. The location management device further includes recommended configuration information, service requirement information, and the like. The access network device may further determine the SRS configuration based on the recommended configuration information and the service requirement information.

The access network device properly configures an RRC state of the terminal device. The access network device may determine the SRS configuration for the terminal device based on the first information, so that the access network device determines an appropriate SRS configuration for the terminal device based on the low power capability of the terminal device. For example, the access network device allocates the appropriate SRS resource for the terminal device, and configures an appropriate SRS sending periodicity, so that the SRS configuration matches the positioning capability that is set by the access network device for the terminal device in the RRC state in step 304. This avoids a problem of resource waste or resource insufficiency and improves resource utilization while ensuring positioning precision.

306. The access network device sends the SRS configuration to the terminal device. Correspondingly, the terminal device receives the SRS configuration from the access network device.

Optionally, the access network device sends the SRS configuration to the terminal device through an RRC message.

It should be noted that in step 304, when the access network device releases the terminal device to the RRC inactive state or the RRC idle state, the access network device may send the RRC release message to the terminal device. Optionally, the RRC release message further includes the SRS configuration in step 306. In other words, the access network device releases the terminal device to the RRC inactive state or the RRC idle state through the RRC release message, and further delivers the SRS configuration to the terminal device. In this implementation, step 304 and step 306 may be combined into: The access network device sends the RRC release message to the terminal device, where the RRC release message is used to release the terminal device to the RRC inactive state or the RRC idle state, and the RRC release message includes the SRS configuration.

307. The access network device sends the SRS configuration to the location management device. Correspondingly, the location management device receives the SRS configuration from the terminal device.

Optionally, step 307 above specifically includes: The access network device sends a positioning information response (positioning information response) to the location management device, where the positioning information response includes the SRS configuration. Correspondingly, the location management device receives a positioning information response from the access network device.

It should be noted that there is no fixed execution sequence between step 305 to step 307 and step 304. Step 304 may be first performed, and then step 305 to step 307 are performed; step 305 to step 307 are first performed, and then step 304 is performed; or step 304 and step 305 to step 307 are simultaneously performed based on a case. This is not specifically limited in this application.

After step 301 to step 307 above, the location management device may select the access network device configured to measure an SRS of the terminal device, and send measurement requests to such access network devices. The measurement request includes the SRS configuration. These access network devices may measure the SRS of the terminal device to obtain measurement results, and separately report the respective measurement results to the location management device. The location management device calculates a location of the terminal device based on the measurement results of these access network devices, to position the terminal device.

The embodiment shown in FIG. 3 shows a specific process in which the technical solution of this application is applied to the uplink positioning scenario. According to the technical solution of this application, the access network device properly configures the RRC state of the terminal device based on the first information. The terminal device has different positioning capabilities in different RRC states. Therefore, the access network device properly configures the state of the terminal device, to ensure an uplink positioning precision requirement of the location management device while implementing the low power positioning on the terminal device. This avoids a problem that an uplink positioning requirement of the location management device cannot be met because the access network device autonomously determines the RRC state of the terminal device without the location management device.

With reference to FIG. 4, the following describes a specific implementation process in which this application is applied to a downlink positioning scenario.

FIG. 4 is a diagram of another embodiment of a communication method according to an embodiment of this application. Refer to FIG. 4. The communication method includes the following steps.

401. A terminal device determines capability information, where the capability information includes a low power capability.

402. The terminal device sends the capability information to a location management device. Correspondingly, the location management device receives the capability information from the terminal device.

Step 401 and step 402 are similar to step 201 and step 202 in the embodiment shown in FIG. 2 above. For details, refer to related descriptions of step 401 and step 402 above. Details are not described herein again.

403. The location management device sends first information to an access network device. The first information includes at least one of the following: the capability information and first indication information. Correspondingly, the access network device receives the first information from the location management device.

Step 403 is similar to step 203 in the embodiment shown in FIG. 2 above. For details, refer to related descriptions of step 203 in the embodiment shown in FIG. 2 above.

404. The access network device keeps the terminal device in an RRC connected state or an RRC inactive state based on the first information, or releases the terminal device from an RRC connected state to an RRC idle state or an RRC inactive state based on the first information.

Step 404 is similar to step 204 in the embodiment shown in FIG. 2 above. For details, refer to related descriptions of step 204 in the embodiment shown in FIG. 2 above. Details are not described herein again.

Optionally, the embodiment shown in FIG. 4 further includes step 405 and step 406. Step 405 and step 406 may be performed after step 403.

405. The location management device determines TRP configuration information based on the capability information.

The TRP configuration information includes PRS configuration information of a TRP.

Specifically, the capability information includes the low power capability. In a downlink positioning scenario, the low power capability includes at least one of the following: that the terminal device supports measurement of a positioning reference signal in the RRC inactive state, a supported positioning method, a supported PRS bandwidth, and a maximum quantity of processing resources supported in one slot. The location management device may select an appropriate TRP based on the low power capability. Optionally, the location management device may further select the appropriate TRP based on a service requirement. This helps the terminal device measure PRSs sent by such TRPs. This avoids a waste of PRS resources or a shortage of PRS resources, so that a downlink positioning precision requirement of the location management device is met.

406. The location management device sends the TRP configuration information to the terminal device.

Optionally, the location management device sends assistance data (assistance data) to the terminal device, where the assistance data includes the TRP configuration information. Correspondingly, the terminal device receives the assistance data from the location management device.

Optionally, the embodiment shown in FIG. 4 further includes step 407 and step 408. Step 407 and step 408 may be performed after step 405.

407. The location management device sends the TRP configuration information to the access network device. Correspondingly, the access network device receives the TRP configuration information from the location management device.

Optionally, the location management device sends a PRS configuration request (PRS configuration request) to the access network device, where the PRS configuration request includes the TRP configuration information. Correspondingly, the access network device receives the PRS configuration request from the location management device.

408. The access network device sends a PRS configuration response (PRS configuration response) to the location management device. Correspondingly, the location management device receives the PRS configuration response from the access network device.

The PRS configuration response is used to notify the location management device that the access network device receives the TRP configuration information. The access network device sends a PRS based on the TRP configuration information.

It should be noted that, if the TRP selected by the location management device further includes a TRP of another access network device, the location management device may further send the TRP configuration information, for example, the PRS configuration information, to the another access network device. Specifically, the location management device may also send the PRS configuration information to the another access network device through the PRS configuration request. The another access network device may feed back, to the location management device through a TRP information response, that the another access network device has received the TRP configuration information.

It should be noted that there is no fixed execution sequence between step 405 to step 408 and step 404. Step 404 may be first performed, and then step 405 to step 408 are performed; step 405 to step 408 are first performed, and then step 404 is performed; or step 404 and step 405 to step 408 are simultaneously performed based on a case. This is not specifically limited in this application.

After the foregoing step 401 to step 408 above, the location management device may send request location information (request location information) to the terminal device, where the request location information is used to request the terminal device to report a measurement result. The terminal device may receive PRSs sent by the TRPs selected by the location management device, and measure these PRSs to obtain the measurement results. Then, the terminal device sends the measurement results to the location management device based on provide location information (provide location information). The location management device calculates a location of the terminal device based on the measurement results, to position the terminal device.

The embodiment shown in FIG. 4 shows a specific process in which the technical solution of this application is applied to the downlink positioning scenario. According to the solution of this application, the access network device properly configures an RRC state of the terminal device based on the first information. The terminal device has different positioning capabilities in different RRC states. Therefore, the access network device properly configures the state of the terminal device, to ensure the downlink positioning precision requirement of the location management device while implementing low power positioning on the terminal device. This avoids a problem that a downlink positioning requirement of the location management device cannot be met because the access network device autonomously determines the RRC state of the terminal device without the location management device.

The following describes a communication apparatus provided in this application. FIG. 5 is a diagram of a structure of a communication apparatus 500 according to an embodiment of this application. The communication apparatus 500 includes a processing unit 501 and a sending unit 502. Optionally, the communication apparatus 500 further includes a receiving unit 503.

The communication apparatus 500 includes a terminal device or a chip in the terminal device. The communication apparatus 500 may be configured to perform all or some of the steps performed by the terminal device in embodiments shown in FIG. 2 to FIG. 4. For details, refer to related descriptions in the foregoing method embodiments shown in FIG. 2 to FIG. 4.

The processing unit 501 is configured to determine capability information, where the capability information includes a low power capability, and the low power capability indicates that the communication apparatus 500 supports low power positioning.

The sending unit 502 is configured to send the capability information to a location management device.

In a possible implementation, the low power capability includes at least one of the following: a maximum quantity of SRS resources or SRS resource sets, an SRS bandwidth, and an SRS sending periodicity that are supported by the communication apparatus 500.

In another possible implementation, the low power capability includes at least one of the following: that the communication apparatus 500 supports measurement of a PRS in an RRC inactive state, a supported positioning method, a supported PRS bandwidth, and a maximum quantity of processing resources supported in one slot.

In another possible implementation, the receiving unit 503 is configured to receive an RRC release message from an access network device, where the RRC release message is used to release the communication apparatus 500 from an RRC connected state to the RRC inactive state or an RRC idle state.

In another possible implementation, the receiving unit 503 is configured to receive TRP configuration information from the location management device, where the TRP configuration information is determined by the location management device based on the capability information.

In another possible implementation, the receiving unit 503 is configured to receive an SRS configuration from the access network device, where the SRS configuration is determined by the access network device for the communication apparatus 500 based on the capability information.

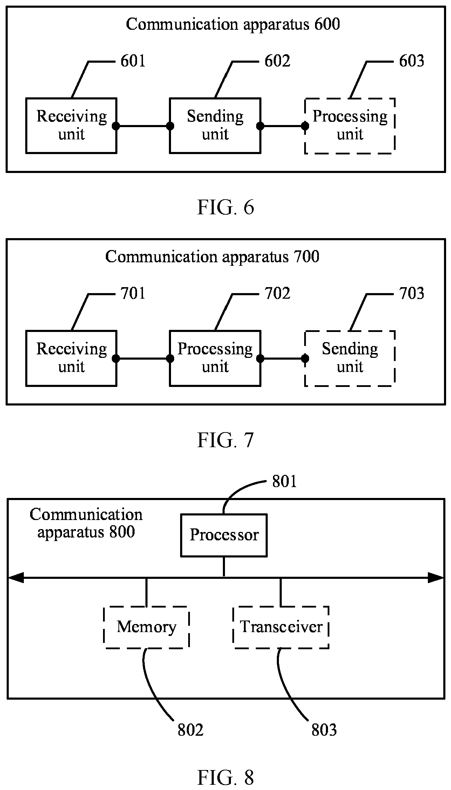

The following describes a communication apparatus provided in this application. FIG. 6 is a diagram of a structure of a communication apparatus 600 according to an embodiment of this application. The communication apparatus 600 includes a receiving unit 601 and a sending unit 602. Optionally, the communication apparatus 600 further includes a processing unit 603.

The communication apparatus 600 includes a location management device or a chip in the location management device. The communication apparatus 600 may be configured to perform all or some of the steps performed by the location management device in embodiments shown in FIG. 2 to FIG. 4. For details, refer to related descriptions in the foregoing method embodiments shown in FIG. 2 to FIG. 4.

The receiving unit 601 is configured to receive capability information from a terminal device, where the capability information includes a low power capability, and the low power capability indicates that the terminal device supports low power positioning.

The sending unit 602 is configured to send first information to an access network device, where the first information includes at least one of the following: capability information and first indication information, the first indication information is used to recommend that low power positioning be performed on the terminal device, and the access network device is a serving access network device of the terminal device.

In a possible implementation, the low power capability includes at least one of the following: a maximum quantity of SRS resources or SRS resource sets, an SRS bandwidth, and an SRS sending periodicity that are supported by the terminal device.

In another possible implementation, the first information is carried in a positioning information request.

In another possible implementation, the receiving unit 601 is further configured to:
receive an SRS configuration from the access network device, where the SRS configuration is determined by the access network device for the terminal device based on the first information.

In another possible implementation, the SRS configuration is carried in a positioning information response.

In another possible implementation, the low power capability includes at least one of the following: that the terminal device supports measurement of a PRS in the RRC inactive state, a supported positioning method, a supported PRS bandwidth, and a maximum quantity of processing resources supported in one slot.

In another possible implementation, the first information further includes at least one of the following: UE measurement information and UE reporting information, the UE measurement information is measurement information used by the terminal device to measure the positioning reference signal, and the UE reporting information is information used by the terminal device to report a measurement result.

In another possible implementation, the processing unit 603 is configured to determine TRP configuration information based on the capability information; and
the sending unit 602 is further configured to:
send the TRP configuration information to the access network device; and
send the TRP configuration information to the terminal device.

The following describes a communication apparatus provided in this application. FIG. 7 is a diagram of a structure of a communication apparatus 700 according to an embodiment of this application. The communication apparatus 700 includes a receiving unit 701 and a processing unit 702. Optionally, the communication apparatus 700 further includes a sending unit 703.

The communication apparatus 700 includes an access network device or a chip in an access network device. The communication apparatus 700 may be configured to perform all or some of the steps performed by the access network device in embodiments shown in FIG. 2 to FIG. 4. For details, refer to related descriptions in the foregoing method embodiments shown in FIG. 2 to FIG. 4.

A receiving unit 701 is configured to receive first information from a location management device, where the first information includes at least one of the following: capability information of a terminal device and first indication information, the capability information includes a low power capability, the low power capability indicates that the terminal device supports low power positioning, the first indication information is used to recommend that the low power positioning be performed on the terminal device, and the communication apparatus is a serving access network device of the terminal device; and

A processing unit 702 is configured to keep the terminal device in an RRC connected state or an RRC inactive state based on the first information, or release the terminal device from the RRC connected state to the RRC inactive state or an RRC idle state based on the first information.

In a possible implementation, the low power capability includes at least one of the following: a maximum quantity of SRS resources or SRS resource sets, an SRS bandwidth, and an SRS sending periodicity that are supported by the terminal device.

In another possible implementation, the first information is carried in a positioning information request.

In another possible implementation, the processing unit 702 is further configured to:
determine an SRS configuration for the terminal device based on the first information.

The sending unit 703 is configured to send the SRS configuration to the terminal device, send a positioning information response to the location management device, where the positioning information response includes the SRS configuration.

In another possible implementation, the low power capability includes at least one of the following: that the terminal device supports measurement of a PRS in the RRC inactive state, a supported positioning method, a supported PRS bandwidth, and a maximum quantity of processing resources supported in one slot.

In another possible implementation, the first information further includes at least one of the following: UE measurement information and UE reporting information, the UE measurement information is measurement information used by the terminal device to measure the positioning reference signal, and the UE reporting information is information used by the terminal device to report a measurement result.

In another possible implementation, the processing unit 702 is specifically configured to:
if the low power capability is a positioning capability of the terminal device in the RRC inactive state or the RRC idle state, send an RRC release message to the terminal device, where the RRC release message is used to release the terminal device from the RRC connected state to the RRC inactive state or the RRC idle state.

In another possible implementation, the receiving unit 701 is further configured to:
receive TRP configuration information of the location management device, where the TRP configuration information is determined by the location management device based on the capability information.

This application further provides a communication apparatus. FIG. 8 is another diagram of a structure of a communication apparatus 800 according to an embodiment of this application.

The communication apparatus 800 includes a processor 801. Optionally, the communication apparatus 800 further includes a memory 802 and a transceiver 803.

The processor 801, the memory 802, and the transceiver 803 are separately connected through a bus, and the memory stores computer instructions.

When the communication apparatus 800 includes the terminal device or a chip in the terminal device, the communication apparatus 800 may be configured to perform the steps performed by the terminal device in embodiments shown in FIG. 2 to FIG. 4. For details, refer to related descriptions in the foregoing method embodiments.

The processing unit 501 shown in FIG. 5 above may be specifically the processor 801. The sending unit 502 and the receiving unit 503 shown in FIG. 5 above may be specifically the transceiver 803. Therefore, specific implementation of the transceiver 803 is not described again.

When the communication apparatus 800 includes a location management device or a chip in the location management device, the communication apparatus 800 may be configured to perform the steps performed by the location management device in embodiments shown in FIG. 2 to FIG. 4. For details, refer to related descriptions in the foregoing method embodiments.

The receiving unit 601 and the sending unit 602 shown in FIG. 6 above may be specifically the transceiver 803. Therefore, specific implementation of the transceiver 803 is not described again. The processing unit 803 shown in FIG. 6 above may be specifically the processor 801. Therefore, specific implementation of the processor 801 is not described again.

When the communication apparatus 800 includes the access network device or the chip in the access network device, the communication apparatus 800 may be configured to perform the steps performed by the access network device in embodiments shown in FIG. 2 to FIG. 4. For details, refer to related descriptions in the foregoing method embodiments.

The receiving unit 701 and the sending unit 703 shown in FIG. 7 above may be specifically the transceiver 803. Therefore, specific implementation of the transceiver 803 is not described again. The processing unit 702 shown in FIG. 7 above may be specifically the processor 801. Therefore, specific implementation of the processor 801 is not described again.

An embodiment of this application further provides a communication system. The communication system includes the terminal device, the location management device, and the access network device. The terminal device is configured to perform all or some of the steps performed by the terminal device in embodiments shown in FIG. 2 to FIG. 4. The location management device is configured to perform all or some of the steps performed by the location management device in embodiments shown in FIG. 2 to FIG. 4. The access network device is configured to perform all or some of the steps performed by the access network device in embodiments shown in FIG. 2 to FIG. 4.

An embodiment of this application further provides a computer program product including computer instructions. When the computer program product runs on a computer, the computer is enabled to perform the communication method in embodiments shown in FIG. 2 to FIG. 4.

An embodiment of this application further provides a computer-readable storage medium, including computer instructions. When the computer instructions are run on a computer, the computer is enabled to perform the communication method in embodiments shown in FIG. 2 to FIG. 4.

An embodiment of this application further provides a chip apparatus, including a processor, configured to invoke a computer program or computer instructions stored in a memory, so that the processor performs the communication method in embodiments shown in FIG. 2 to FIG. 4.

Optionally, the processor is coupled to the memory through an interface.

Optionally, the chip apparatus further includes the memory, and the memory stores a computer program or the computer instructions.

The processor mentioned in any of the foregoing may be a general central processing unit, a microprocessor, an application-specific integrated circuit (application-specific integrated circuit, ASIC), or one or more of integrated circuits configured to control program execution of the communication method in embodiments shown in FIG. 2 and FIG. 4. The memory mentioned anywhere above may be a read-only memory (read-only memory, ROM), another type of static storage device that can store static information and instructions, a random access memory (random access memory, RAM), or the like.

In addition, it should be noted that the apparatus embodiments described above are merely examples. The units described as separate parts may or may not be physically separate, and parts displayed as units may or may not be physical units, in other words, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable-storage medium, for example, a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, network device, or local computing device, computing device, or data center through a wired network. (e.g., coaxial cable, optical fiber, digital subscriber line (DSL)) or wirelessly (e.g., infrared, radio, microwave, etc.) to another website, computer, network device, or local computing device, computing device, or data center. The computer-readable storage medium may be any usable medium that can be stored by a computer, or a data storage device, for example, a network device, a local computing device, or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state disk (solid state disk, SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, a part contributing to the current technology, or all or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, wherein the method comprises:
determining, by a terminal device, capability information, wherein the capability information comprises a low power capability, and the low power capability indicates that the terminal device supports low power positioning; and
sending, by the terminal device, the capability information to a location management device.

2. The method according to claim 1, wherein the low power capability comprises at least one of the following: a maximum quantity of sounding reference signal SRS resources or SRS resource sets, an SRS bandwidth, and an SRS sending periodicity that are supported by the terminal device.

3. The method according to claim 1, wherein the low power capability comprises at least one of the following: that the terminal device supports measurement of a positioning reference signal PRS in a radio resource control RRC inactive state, a supported positioning method, a supported PRS bandwidth, and a maximum quantity of processing resources supported in one slot.

4. The method according to any one of claims 1 to 3, wherein the method further comprises:
receiving, by the terminal device, a radio resource control RRC release message from an access network device, wherein the RRC release message is used to release the terminal device from a radio resource control RRC connected state to the RRC inactive state or an RRC idle state.

5. A communication method, wherein the method comprises:
receiving, by a location management device, capability information from a terminal device, wherein the capability information comprises a low power capability, and the low power capability indicates that the terminal device supports low power positioning; and
sending, by the location management device, first information to an access network device, wherein the first information comprises at least one of the following: the capability information and first indication information, the first indication information is used to recommend that the low power positioning be performed on the terminal device, and the access network device is a serving access network device of the terminal device.

6. The method according to claim 5, wherein the low power capability comprises at least one of the following: a maximum quantity of sounding reference signal SRS resources or SRS resource sets, an SRS bandwidth, and an SRS sending periodicity that are supported by the terminal device.

7. The method according to claim 6, wherein the first information is carried in a positioning information request.

8. The method according to claim 5, wherein the low power capability comprises at least one of the following: that the terminal device supports measurement of a positioning reference signal PRS in a radio resource control RRC inactive state, a supported positioning method, a supported PRS bandwidth, and a maximum quantity of processing resources supported in one slot.

9. The method according to claim 8, wherein the first information further comprises at least one of the following: user equipment UE measurement information and UE reporting information, the UE measurement information is measurement information used by the terminal device to measure the positioning reference signal, and the UE reporting information is information used by the terminal device to report a measurement result.

10. A communication method, wherein the method comprises:
receiving, by an access network device, first information from a location management device, wherein the first information comprises at least one of the following: capability information of a terminal device and first indication information, the capability information comprises a low power capability, the low power capability indicates that the terminal device supports low power positioning, the first indication information is used to recommend that the low power positioning be performed on the terminal device, and the access network device is a serving access network device of the terminal device; and
keeping, by the access network device, the terminal device in a radio resource control RRC connected state or an RRC inactive state based on the first information, or releasing the terminal device from an RRC connected state to an RRC inactive state or an RRC idle state based on the first information.

11. The method according to claim 10, wherein the low power capability comprises at least one of the following: a maximum quantity of sounding reference signal SRS resources or SRS resource sets, an SRS bandwidth, and an SRS sending periodicity that are supported by the terminal device.

12. The method according to claim 11, wherein the first information is carried in a positioning information request.

13. The method according to claim 10, wherein the low power capability comprises at least one of the following: that the terminal device supports measurement of a positioning reference signal in the RRC inactive state, a supported positioning method, a supported positioning reference signal bandwidth, and a maximum quantity of processing resources supported in one slot.

14. The method according to claim 13, wherein the first information further comprises at least one of the following: user equipment UE measurement information and UE reporting information, the UE measurement information is measurement information used by the terminal device to measure the positioning reference signal, and the UE reporting information is information used by the terminal device to report a measurement result.

15. The method according to any one of claims 10 to 14, wherein the releasing, by the access network device, the terminal device from an RRC connected state to an RRC idle state or an RRC inactive state based on the first information comprises:
if the low power capability is a positioning capability of the terminal device in the RRC inactive state or the RRC idle state, sending, by the access network device, an RRC release message to the terminal device, wherein the RRC release message is used to release the terminal device from the RRC connected state to the RRC inactive state or the RRC idle state.

16. A communication apparatus, wherein the communication apparatus comprises a processing unit and a sending unit, wherein
the processing unit is configured to perform the processing operation according to any one of claims 1 to 4, and the sending unit is configured to perform the sending operation according to any one of claims 1 to 4.

17. A communication apparatus, wherein the communication apparatus comprises a receiving unit and a sending unit, wherein
the receiving unit is configured to perform the receiving operation according to any one of claims 5 to 9, and the sending unit is configured to perform the sending operation according to any one of claims 5 to 9.

18. A communication apparatus, wherein the communication apparatus comprises a processing unit and a receiving unit, wherein
the processing unit is configured to perform the processing operation according to any one of claims 10 to 15, and the receiving unit is configured to perform the receiving operation according to any one of claims 10 to 15.

19. A communication apparatus, wherein the communication apparatus comprises a processor, and the processor is configured to execute a computer program or computer instructions in a memory, to perform the method according to any one of claims 1 to 4, or perform the method according to any one of claims 5 to 9, or perform the method according to any one of claims 10 to 15.

20. A computer-readable storage medium, comprising computer instructions, wherein when the computer instructions are run on a computer, the computer is enabled to perform the method according to any one of claims 1 to 4, or the computer is enabled to perform the method according to any one of claims 5 to 9, or the computer is enabled to perform the method according to any one of claims 10 to 15.
